# EUROPEAN PATENT APPLICATION

(11) **EP 2 429 183 A1**
(43) Date of publication of application: **14.03.2012**
(21) Application number: 10175818.3
(22) Date of filing: 08.09.2010
(51) Int. Cl.: H04N 5/44, G06K 9/00

(54) **Remote control with sensor**

(71) Applicant: Nagravision S.A., 1033 Cheseaux-sur-Lausanne (CH)
(72) Inventor: Oddou, Christophe, 94340, Joinville Le Pont (FR); Dagaeff, Thierry, 1148, L'Isle (CH); Fullton, Laura, 1006, Lausanne (CH)
(74) Representative: Leman Consulting S.A.

(57) **Abstract**

The present invention concerns the field of remote control for television, in particular with the capability to collect data about the user currently using the remote control.

It is proposed a remote control for television comprising a keypad for entering commands, and comprising a skin spectroscopy sensor,. as well as a method to access audio/video data by a receiver having a memory to store profile information about users identified by a profile id, and a remote control to pass commands to the receiver and select one of the profiles and having a skin spectroscopy sensor to acquire biometric feature of a user, said method comprising the steps of :
In an enrolment phase :
- scanning a particular user with the skin spectroscopy sensor and extracting the reference biometric feature of said user,
- associating the reference biometric feature with a particular profile id,
- storing the reference biometric feature in association with the profile id,

In a detection phase :
- starting a scan on the remote control with the skin biometric sensor,
- extracting the biometric features of the user,
- comparing the biometric features with the reference biometric features stored previously,
- in case of match, selecting by the receiver the profile information related to said id.

## Description

### Field of the invention

The present invention concerns the field of remote control for television, in particular with the capability to collect data about the user currently using the remote control.

### Problem to be solved

The TV experience is going to be improved thanks to new interactive features taking into account the individuality of TV viewers:
- Personalized Electronic Program Guide with preferred channels
- Personal widget space
- Recommendation of audiovisual contents based on personal profile
- Recommendation based on a community of friends (social networks)
- Targeted advertising based on viewers' profile
- Parental control based on the age of the TV viewer
- Automatic login when accessing favorite web services
- "Follow me" TV in the scope of a home network with connected TV equipped with cameras.

In this context, it becomes important to know who is actually watching TV; however, without a strong incentive, people may find cumbersome to constantly sign in (e.g. pressing a button of the Remote Control dedicated to each householder).

The problem that we want to solve is to design a viewer identification technology which can covertly identify users without having to actively participate in the sign-in process.

In a second embodiment, in addition to viewer identification, we wish to measure the emotional status of the TV viewer in order to update his profile to adapt future recommendations or simply to provide immediate feedback.

### Proposed solution

### Main principle

The proposed solution consists in placing a skin spectroscopy sensor on the side of the remote control device (RC) which comes into contact with the hand while holding the device (typically the back of the RC which touches the palm of the hand).

The "skin spectroscopy" technology recognizes skin differences by their optical properties. A small patch of skin is illuminated by a sensor via multiple wavelengths (i.e., colors) of visible and near infrared light. The light is reflected back after being scattered in the skin and is then measured for each of the wavelengths. Reflectance variability of the various light frequencies as they pass through the skin are analyzed and processed to extract a characteristic optical pattern which is specific to each individual.

A spectral biometric system consists of three major subsystems: the optical sensor, electronics to drive the sensor, and the algorithm and procedures used to derive biometric features from the raw spectral data. Note that other skin recognition systems use high-resolution cameras to capture images then the algorithms analyze the skin for features, such as wrinkles, pores, structure, texture, etc.

Skin patterns, whether identified by algorithms via spectral analysis or surface texture analysis are a physical trait that is thought to be distinguishable among all people, including identical twins. It can work for individuals with any skin color and aging should not affect results. In our specific application, the goal is just to distinguish one person among all householders.

### Brief description of the drawings

The present invention will be better understood thanks to the attached figures in which :
Figure 1 illustrates the identification stpes of a user
Figure 2 illustrates the remote win connection with the STB
Figure 3 illustrates the process involving the RC and the STB
Figure 4 illustrates the process in which the RC carries out the feature extraction

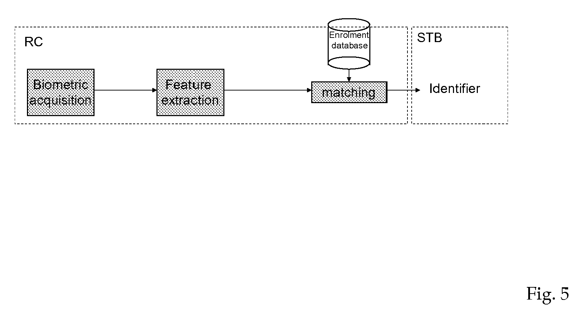

Figure 5 illustrates the process carried out by the RC

### Identification procedure

The TV viewer identification is a 2-step procedure:
- The first step consists in enrolling each householder; it is done once at system set-up.
- The second step consists in identifying the person holding the RC.

The former step simply consists in assigning a "user_id" to the biometric pattern related to "User X" holding the RC and storing both pieces of information in a database.

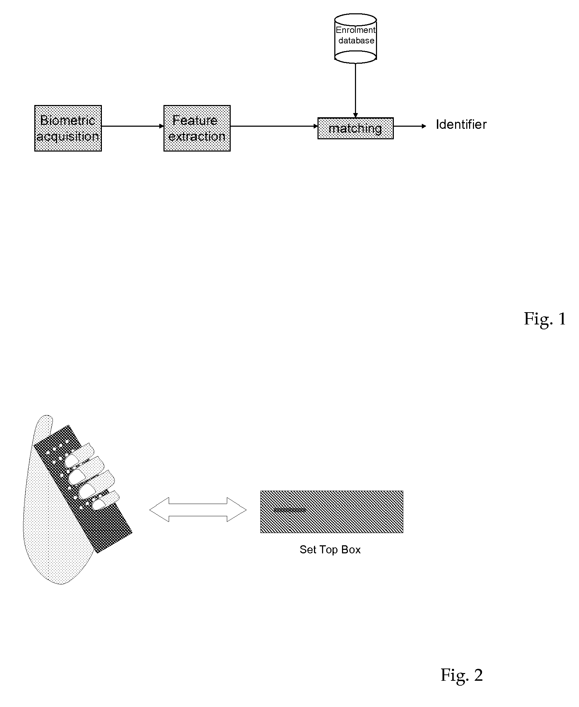

The latter step is made of 3 operations as depicted in the figure 1:
1. Biometric acquisition: it consists in capturing biometric raw data.
2. Feature extraction: it consists in extracting a set of coefficients from the raw data; the corresponding pattern shall be sufficient to distinguish one individual among all samples stored in the enrolment database.
3. Matching: it consists in finding the nearest sample in the enrolment database. The related identifier identifies the individual providing biometric data to the sensor.

### Possible architectures

The Remote Control communicates with the Set Top Box device (STB) using a communication channel as depicted in the figure 2:
3 architectures are possible depending on:
   - the processing power of the Remote Control device,
   - the throughput capacity of the communication channel between the STB device and the Remote Control
   - the directionality of this communication channel

### First architecture

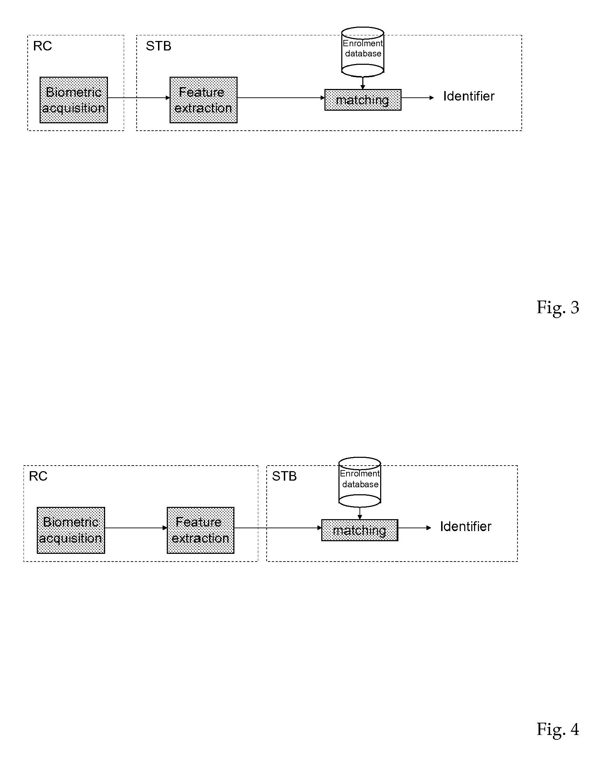

The first architecture consists in running the biometric acquisition in the RC, leaving subsequent operations for the STB, as shown in the figure 3 :

In this architecture, the skin sensor captures the biometric raw data and passes them to the STB which subsequently extracts biometric features to create a workable biometric pattern.

Subsequent operations are context-dependent:
- Enrolment step:
   If the STB is carrying out the enrolment of "user X" having the identifier "user_id", the biometric pattern and the related "user_id" assigned by the STB enrolment application are stored in the local database embedded in the STB device.
- Identification step:
   When the STB needs to identify the TV viewer (continuously or on application trigger), the processing unit of the STB carries out the matching i.e. it compares the biometric pattern derived from the raw data received from the RC with all samples stored in the local database in order to find out the nearest sample.

The identifier related to the nearest sample identifies the individual holding the RC.

### Second architecture

The second architecture consists in running the biometric acquisition and the feature extraction in the RC, leaving the matching operation for the STB, as shown in the figure 4 :

In this architecture, the skin sensor captures the biometric raw data and extracts the biometric features to create a workable biometric pattern. This pattern is passed to the STB.

At this stage, the processing is context-dependent:
- Enrolment step:
   If the STB is carrying out the enrolment of "user X" having the identifier "user_id", the biometric pattern and the related "user_id" are stored in the local database embedded in the STB device.
- Identification step:
   When the STB needs to identify the TV viewer (continuously or on application trigger), the processing unit of the STB carries out the matching operation.

The identifier of the matching sample identifies the individual holding the RC.

### Third architecture

In this architecture, all operations are carried out in the RC; the resulting identifier is passed to the STB as shown by the following 5 :
- Enrolment step:
   The STB informs the RC that it is now enrolling "user X" having the identifier "user_id". Note that, unlike other architectures, this one requires a bi-directional communication channel between the RC and the STB.

At this step, User X is supposed to hold the RC as per instructions displayed on TV; the skin sensor extracts the biometric pattern.

The biometric pattern and the related "user id" are stored in local database embedded in RC device.

The RC acknowledges the STB at the end of "User X" enrolment.
- Identification step:
   A first possibility is to periodically carry out the identification procedure (e.g. every second) in order to continuously monitor the user identifier.

When the sensor extracts a workable biometric pattern, the processing unit of the RC compares it with all samples stored in the local database in order to find out the nearest sample.

The identifier of the matching sample identifies the individual holding the RC. It is spontaneously transmitted to the STB, or provided as an answer to a STB request or even sent only with a command of the user. In this latter case, the identifier of the user can be sent only with some specific commands. For example, some commands such as volume adjustment, will not generate the sending of the identifier of the user. We consider that the main user remains the same even if another user adjusts the volume. However, in another case, for example the change of a channel, the receiver should know who requested that change. In this case, the change channel command is sent together with the identifier of the user.

Alternatively, a second possibility is that a STB application triggers the identification procedure when needed. For example, when launching a personalized EPG, it may be necessary to trigger the identification procedure in order to personalize the display based on the user's profile..

In that case, once the matching sample in the database is identified, the identifier is passed to the STB application.

### Triggering options

For any of the 3 above architectures, several triggering options may apply:

According to an embodiment, the remote control initiates a scan only when the user is holding the RC in its hands in order to preserve the lifetime of the battery which can be reduced by extensive usage of the CPU for useless processing. To detect this state, the RC can have the following means:
- a switch bar which is pressed when the RC is taken into the hands. This switch is preferably located on the side of the RC so when the RC is seized by the user, the switch is actuated. The RC can also comprise two switch bars located on each side of the RC.
- a movement (or motion) detector. A motion detector is a device that contains a physical mechanism or electronic sensor that quantifies motion. As soon as a motion is detected, the scan can start.
- a temperature sensor. The temperature of the hand is generally higher than the temperature in a rest position. The sensor is preferably located on the back of the RC and any rapid change of temperature means that the RC is currently used by a user.
- capacitive sensor. This method senses the changed of capacitance when the user comes in close contact on the switch plate surface.
- resistive sensor. The RC has one or two conductive bars on each side of the case and the picking up of the RC will alter the resistance between these two bars.
- radio receiver antenna. It is known that, when one touch an antenna, the reception gets better on a TV or radio. That's because the human body makes a pretty good antenna. The variation of reception of the receiver is detected by the RC.

### Other embodiments

In the context of user identification, the skin spectroscopy sensor focuses on invariant characteristics of the skin. In a second embodiment, the sensor may be tuned to measure the variable characteristics of the skin which vary with the emotional status of the person. As an example, the light spectrum may be shifted in frequency to reach deeper structures of the skin which may be affected by vasodilatation or vasoconstriction in case of emotional reactions.

In a third embodiment, the RC device is not only equipped with a skin spectroscopy sensor but also a skin conductivity sensor to measure the variations in conductivity in order to monitor the viewer's emotional status.

In a fourth embodiment, the RC device is not only equipped with a skin spectroscopy sensor but also a Heart Rate sensor to measure the variations in the Heart Rhythm in order to monitor the viewer's emotional status.

Note that emotional status measurement is a recurrent monitoring process which implies that the viewer keeps the RC device in his hands while watching TV.

## Claims

1. Remote control for television comprising a keypad for entering commands **characterized in that**, it further comprises a skin spectroscopy sensor able to measure the characteristics of the skin, and means to send a signal allowing to identify the particular user currently using the remote control.

2. Remote control of claim 1, **characterized in that**, it comprises a memory to store a plurality of reference images relative to different users, means to acquire skin spectroscopy image with the skin spectroscopy sensor, means to compare the acquired image with the reference images so as to identify the particular user.

3. Remote control of claim 1, **characterized in that**, it comprises means to extract the biometric feature of the acquired image, and further comprises a memory to store a plurality of biometric features relative to different users, means to acquire skin spectroscopy image with the skin spectroscopy sensor, means to extract the biometric feature and means to compare the acquired biometric feature with the reference biometric features so as to identify the particular user.

4. Remote control of any of the claims 1 to 3, **characterized in that**, it comprises bi-directional communication means, and triggering means, the reception of a message on the communication message triggers the scan of an image.

5. Remote Control of any of the claims 1 to 3, **characterized in that**, it comprises means to detect that someone picks up the remote control (switch bar, motion detector, capacitive sensor, resistive sensor...) so as to trigger the scan of an image.

6. Remote control of any of the claims 1 to 5, **characterized in that** it comprises a keypad for entering commands **characterized in that**, it further comprises a skin spectroscopy sensor able to measure variations of the characteristics of the skin and means to send a signal allowing to estimate the emotional status of the person holding the Remote Control.

7. Remote Control of any of the claims 1 to 5, **characterized in that** it also comprise a second sensor (Conductivity sensor or Heart Rate Sensor) dedicated to the measurement of the emotional status of the person holding the Remote Control.

8. Method to access audio/video data by a receiver having a memory to store profile information about users identified by a profile id, and a remote control to pass commands to the receiver and select one of the profiles and having a skin spectroscopy sensor to acquire biometric feature of a user, said method comprising the steps of :
In an enrolment phase :
- scanning a particular user with the skin spectroscopy sensor and extracting the reference biometric feature of said user,
- associating the reference biometric feature with a particular profile id,
- storing the reference biometric feature in association with the profile id,
In a detection phase :
- starting a scan on the remote control with the skin biometric sensor,
- extracting the biometric features of the user,
- comparing the biometric features with the reference biometric features stored previously,
- in case of match, selecting by the receiver the profile information related to said id.

9. Method of claim 8, in wherein the scan at the detection phase is started while the remote control detects that the remote control is picked up by a user.

10. Method of claim 8 or 9, in which at the enrolment phase, the remote control carries out the step of scanning and extracting the reference biometric feature, said reference biometric feature being sent to the receiver and store into the receiver is association with the profile id, and at the detection phase, the remote control carries out the step of scanning and extracting the reference biometric feature, said biometric feature being sent to the receiver and comparison with the previously stored reference features.

11. Method of claim 8 or 9, in which at the enrolment phase, the remote control carries out the step of scanning, extracting the reference biometric feature and storing the reference biometric feature in association with a profile id, and at the detection phase, the remote control carries out the step of scanning, extracting the biometric feature, and comparing with the stored reference features, and a step of sending the profile id to the receiver in case of match.
